# EUROPÄISCHE PATENTSCHRIFT

(11) **EP 1 090 666 B1**
(45) Veröffentlichungstag und Bekanntmachung des Hinweises auf die Patenterteilung: **12.11.2008**
(21) Anmeldenummer: 00120901.4
(22) Anmeldetag: 26.09.2000
(51) Int. Cl.: B01D 35/18, B01D 35/30

(54) **Adapterplatte für einen Flüssigkeitsfilter und Flüssigkeitsfilter mit Schlauchstutzen als Anschluss**
Adapter plate for a liquid filter and liquid filter with hose connection
Plaque adaptatrice pour un filtre à liquide et filtre à liquide connecté à des tuyaux souples

(30) Priorität: 09.10.1999 DE 19948767
(43) Veröffentlichungstag der Anmeldung: 11.04.2001
(73) Patentinhaber: Mann + Hummel GmbH, 71638 Ludwigsburg (DE)
(72) Erfinder: Scherle, Uwe, 94419 Reisbach (DE); Schwinghammer, Alfons, 84130 Dingolfing (DE); Strebl, Helmut, 84163 Marklhofen (DE)
(74) Vertreter: Voth, Gerhard

(56) Entgegenhaltungen:
- DE-A- 2 341 262
- US-A- 4 193 442
- US-A- 4 452 695
- US-A- 4 646 703

## Beschreibung

### Stand der Technik

Die Erfindung betrifft eine Adapterplatte für einen Flüssigkeitsfilter und ein Flüssigkeitsfilter, insbesondere Kraftstofffilter für eine Brennkraftmaschine, welche zur Bildung eines Einlasses sowie eines Auslasses Rohrstutzen aufweist, nach der Gattung des Patentanspruches 1.

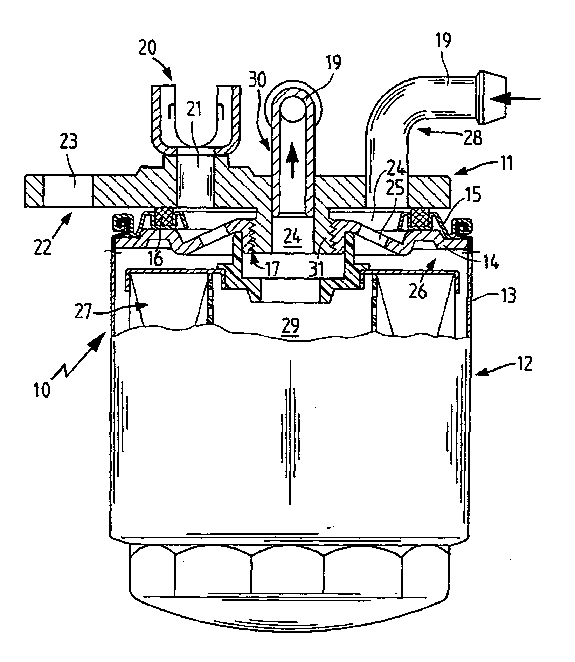

Derartige Filter sind bekannt, z. B. aus der DE 33 12 613 C2. Dieses Dokument bezieht sich auf ein Wegwerffilter, das zum Anschluß an das Flüssigkeitssystem mit Schlauchstutzen ausgestattet ist (vergl. Figur 1 dieses Dokumentes). Die Schlauchstutzen 19, 20 sind in einen Deckel 12 des Gehäuses 10 eingelötet oder geschweißt, wobei der Deckel fest mit dem Gehäusekörper 11 verbunden ist. Dieses Filter muß nach einem Filterwechsel vollständig entsorgt werden, da es sich nicht demontieren läßt.

Einerseits ist die Herstellung derartiger Wegwerffilter sehr wirtschaftlich. Jedoch ist die Angliederung der Schlauchstutzen mit einem vergleichsweise hohen Fertigungsaufwand verbunden. Eine einfachere Lösung, die sich kostengünstiger herstellen läßt, wird in der EP 806 564 A1 vorgeschlagen. Figur 1 dieses Dokumentes zeigt ebenfalls ein Wegwerffilter, wobei die Verbindung zwischen Gehäusekörper 22 und Deckel 26 durch Umbördelung der Blechkante des Gehäusekörpers erzielt wird. Das aufwendige Einlöten von Schlauchstutzen wird dadurch vermieden, daß der Deckel 26 ein zentral angeordnetes Gewindeloch aufweist, mit dessen Hilfe das Filter auf einen entsprechenden Gewindestutzen 14 aufgeschraubt werden kann. Hierdurch werden gleichzeitig die Verbindungen zwischen Einlaß 12 und Auslaß 17 hergestellt, wobei ein Dichtring 34 zu einer Abdichtung dieser Verbindungen führt. Dieses Filter ist wesentlich kostengünstiger in der Herstellung, eignet sich jedoch nicht für Anwendungsfälle, in denen die Schnittstelle vom Filter zum flüssigkeitsführenden System über Schläuche erfolgen soll.

Aus der GB 2 195 914 ist ein Filtersystem zu entnehmen, das an einem Anschlußkopf Flüssigkeitszuleitungen und Flüssigkeitsableitungen aufweist. Ferner enthält der Anschlußkopf eine zentrale Öffnung in welche eine Anschlußschraube einsetzbar ist. Diese Schraube dient zum Befestigen eines Filterelements und gleichzeitig zum Ableiten der gereinigten Flüssigkeit.

Aus der JP 58 128 458 ist ein Filtersystem zu entnehmen das eine Heizeinrichtung in einem Anschlußkopf aufweist.

Aufgabe der Erfindung ist es daher, eine Adapterplatte und ein Flüssigkeitsfilter mit Schlauchstutzen als Anschlüsse zu schaffen, die kostengünstig in der Herstellung sind. Diese Aufgabe wird durch die Merkmale des Patentanspruches 1 und Patentanspruch 5 gelöst.

### Vorteile der Erfindung

Die Erfindung ermöglicht die Verwendung der bereits beschriebenen, kostengünstigen Wegwerffilter mit zentralem Gewindeloch im Deckel für Anwendungsfälle, in denen Schlauchstutzen zur Verbindung mit dem flüssigkeitsführenden System notwendig sind. Dies wird dadurch erreicht, daß eine Adapterplatte vorgesehen wird, die einerseits die notwendigen Schlauchstutzen zum Anschluß des Flüssigkeitsfilters aufweist und andererseits einen Schraubanschluß besitzt, der zur Verbindung mit dem Gewindeloch des Wegwerffilters geeignet ist. Die Schlauchstutzen sind durch Verbindungskanäle mit den entsprechenden Ein- und Auslässen des Wegwerffilters verbunden. Insbesondere dient das Gewindeloch selbst als Auslaß für die gefilterte Flüssigkeit. Der Einlaß kann mittels Durchgängen in der Deckelplatte realisiert werden, die das Gewindeloch ringförmig umgeben und zur Rohseite des Filterelements führen. Eine Abdichtung der Einlässe erfolgt durch den bereits erwähnten Dichtring, der sich auf der Adapterplatte abstützt.

Die Vorteile der beschriebenen Variante liegen in einer Wiederverwendbarkeit der Adapterplatte. Hierdurch können die teuer herzustellenden Schlauchanschlüsse wiederverwendet werden, wobei bei einem Filterwechsel nur das Wegwerffilter mit dem Gewindeloch ausgetauscht wird, während die Adapterplatte, die keine Verschleißteile enthält, am Einbauort verbleibt. Hierdurch wird Material für das Wegwerffilter eingespart, wodurch dieser im Vergleich zu Wegwerffiltern, bei denen die Schlauchstutzen angelötet sind, kostengünstiger hergestellt werden kann. Außerdem läßt die Adapterplatte die Verwendung von Standardfiltern für unterschiedliche Anwendungsfälle zu. Hierdurch kann die Variantenvielfalt für die Wegwerffilter verringert werden, was zu geringeren Lagerkosten und höheren Stückzahlen führt, wodurch die Lösung zusätzlich wirtschaftlicher wird. Die Adapterplatte schont zusätzlich die Schläuche, die bei einem Filterwechsel nicht jedesmal von den Schlauchstutzen entfernt und auf andere wieder aufgesteckt werden müssen. Hierdurch läßt sich der Verschleiß dieser Bauteile verringern und somit die Funktionszuverlässigkeit des Filters verbessern.

Die Erfindung sieht ferner vor, einen Anschluß für eine Heizung für das zu filternde Fluid in die Adapterplatte zu integrieren. Auch dieses Bauteil braucht dann nicht in den auszuwechselnden Wegwerffiltern integriert zu sein. Ähnlich wie die Schläuche werden bei einem Filterwechsel die empfindlichen Heizungsbauteile geschont, die an der Adapterplatte verbleiben können und nicht jedesmal demontiert werden müssen. Vorteilhafterweise ist der Anschluß für die Heizung als Bajonettverschluß ausgeführt. Es können marktübliche Heizungsmodule, die mit entsprechenden Bajonettverschlüssen ausgestattet sind, verwendet werden. Die Verwendung derartiger Zukaufteile trägt auch zu einer Erhöhung der Wirtschaftlichkeit der vorgeschlagenen Lösung bei.

Ein weiteres Funktionselement, mit dessen Hilfe die Adapterplatte vorteilhafterweise erweitert werden kann, ist eine Befestigungsvorrichtung zur Fixierung des Flüssigkeitsfilters in der Einbauposition. Diese kann z. B. aus einer an der Adapterplatte angebrachten Flanschverbindung bestehen. Anstelle eines Flansches, welcher z. B. ein Durchgangsloch für eine Schraube aufweisen kann, ist es auch möglich, ein Gewindeloch für eine Schraubverbindung vorzusehen. Eine andere Möglichkeit besteht darin, eine Nut oder Ösen für einen Spanngurt vorzusehen, mit dessen Hilfe die Adapterplatte an ihrem Einbauort fixiert werden kann. Auch ist es möglich, Absätze für Schnapphaken oder dergl. vorzusehen.

Durch Befestigung der Adapterplatte am Einbauort wird der Wechsel des Wegwerffilters zusätzlich vereinfacht. Die Adapterplatte ist am Einbauort fest eingespannt und verbleibt auch während des Filterwechsels am Einbauort. Das Wegwerffilter kann dann durch Anlegen eines entsprechenden Spezialschlüssels gelöst und demontiert werden. Selbstverständlich ist es auch möglich, die Mittel zur Befestigung am Wegwerffilter selbst vorzusehen. In diesem Fall wird die Einheit, bestehend aus Adapterplatte und Wegwerffilter, zunächst demontiert. Anschließend wird die Adapterplatte von Wegwerffilter getrennt.

Ein Flüssigkeitsfilter mit einer Adapterplatte ist gemäß den Merkmalen des Patentanspruchs 5 ebenfalls unter Schutz gestellt.

Diese und weitere Merkmale von bevorzugten Weiterbildungen der Erfindung gehen außer aus den Ansprüchen auch aus der Beschreibung und den Zeichnungen hervor.

### Zeichnung

Weitere Einzelheiten der Erfindung werden in der Zeichnung anhand eines schematischen Ausführungsbeispiels beschrieben. Hierbei zeigt die einzige Figur einen Flüssigkeitsfilter mit Adapterplatte im teilweise aufgeschnittenen Zustand.

### Beschreibung des Ausführungsbeispiels

Das dargestellte Flüssigkeitsfilter besteht aus einem Wegwerffilter 10 und einer Adapterplatte 11. Der Wegwerffilter 10 stellt eine Baueinheit dar, wobei ein Gehäuse 12 aus einem Blechtopf 13 und einer Deckelplatte 14 besteht. Durch Umbördelung des Randes des Blechtopfes ist das Wegwerffilter montiert, wobei zusätzlich ein Dichtungshalter 15 aus Blech zur Anwendung kommt. Dieser dient zur Aufnahme eines Dichtrings 16, welcher bei Aufschrauben des Wegwerffilters über ein Gewindeloch 17 in der Deckelplatte zu einer axialen Dichtung führt.

Im Ausführungsbeispiel ist das Wegwerffilter auf einen stutzenförmigen Schraubanschluß 31 der Adapterplatte 11 aufgeschraubt. Eine Dichtung des Dichtringes 16 kommt durch die Adapterplatte zustande. Die Adapterplatte weist weiterhin zwei Schlauchstutzen 19 auf, die zur Verbindung mit nicht dargestellten Schläuchen vorgesehen sind, durch die das zu filternde Fluid aus dem Flüssigkeitsfilter ein- bzw. ausgeleitet werden kann. Weiterhin ist an der Adapterplatte ein Bajonettverschluß 20 vorgesehen, mit dessen Hilfe eine nicht dargestellte Heizung für das Fluid montiert werden kann. Der Bajonettverschluß ist über eine Bohrung 21 mit dem Innenraum des Flüssigkeitsfilters verbunden, so daß eine Heizung des Fluids erfolgen kann. Weiterhin ist an der Platte eine Befestigungsvorrichtung 22 vorgesehen. Diese besteht aus einer Flanschverbindung, welche durch einen Ansatz an der Adapterplatte gebildet ist, welche ein Aufnahmeloch 23 für eine Schraube beinhaltet.

Das zu filternde Fluid strömt durch den einen Schlauchstutzen 19 durch einen ersten Verbindungskanal 24, weiter durch Durchgänge 25 in eine Rohseite 26 im Gehäuse 12. Auf diese Weise ist ein Einlaß 28 gebildet. Von der Rohseite 26 durchtritt das zu filternde Fluid ein Filterelement 27 und gelangt so auf eine Reinseite 29 im Inneren des Filterelementes. Von dort aus kann das zu filternde Fluid durch einen Auslaß 30 das Flüssigkeitsfilter verlassen. Der Auslaß 30 ist ebenfalls durch einen Verbindungskanal 24 im Schraubanschluß 31 der Adapterplatte und durch den mit diesem verbundenen Schlauchstutzen 19 gebildet.

## Patentansprüche

1. Adapterplatte (11) für einen Flüssigkeitsfilter mit integrierten Schlauchstutzen (19) sowie mit einem Einlass (28) und mit einem Auslass (30), welche jeweils einen der Schlauchstutzen (19) als Anschluss für eine Flüssigkeitszuleitung beziehungsweise als Anschluss für eine Flüssigkeitsableitung aufweisen,
**dadurch gekennzeichnet, dass**
ein weiterer Anschluss (20;21) für eine Heizung für das zu filternde Fluid vorgesehen ist und
eine einstückige Ausbildung mit einem Schraubanschluss (31) für einen Wegwerffilter (10) mit einem zentralen Gewindeloch (17) besteht.

2. Adapterplatte (11) nach Anspruch 1, **dadurch gekennzeichnet, dass** der Anschluss für die Heizung als Bajonettverschluss (20) ausgeführt ist.

3. Adapterplatte (11) nach Anspruch 1 oder 2, **dadurch gekennzeichnet, dass** eine Befestigungsvorrichtung (22) vorgesehen ist.

4. Flüssigkeitsfilter mit einer Adapterplatte (11) nach Anspruch 1, **dadurch gekennzeichnet, dass** einer der Schlauchstutzen (19) mit einem Einlass (28) und ein Schlauchstutzen (19) mit einem Auslass (30) des angeschraubten Wegwerffilters (10) über Verbindungskanäle (24) kommuniziert.

5. Flüssigkeitsfilter nach Anspruch 4, **dadurch gekennzeichnet, dass** der angeschraubte Wegwerffilter (10) ein in einem Gehäuse (12) angeordnetes Filterelement (27) aufweist.

6. Flüssigkeitsfilter nach Anspruch 5, **dadurch gekennzeichnet, dass** das Filterelement (27) einen Einlass (28) von einem Auslass (30) für die zu filternde Flüssigkeit dichtend voneinander trennt.

7. Flüssigkeitsfilter nach einem der Ansprüche 4 bis 6, **dadurch gekennzeichnet, dass** der Wegwerffilter (10) als Kraftstofffilter für eine Brennkraftmaschine, ausgebildet ist.

## Claims

1. Adapter plate (11) for a liquid filter with integrated hose connector (19) as well as with an inlet (28) and an outlet (30) which feature each a hose connector (19) as a connection for a liquid supply line or as a connection for a liquid discharge,
**characterized in that**
another connection (20;21) for a heating for the fluid to be filtered is provided for and that a one-piece component with a screwed connection (31) for a throwaway filter (10) with a central threaded hole (17) exists.

2. Adapter plate (11) according to claim 1, **characterized in that** the connection for the heating is designed as bayonet connection (20).

3. Adapter plate (11) according to claim 1 or 2, **characterized in that** a fastening device (22) is provided for.

4. Liquid filter with an adapter plate (11) according to claim 1, **characterized in that** one of the hose connectors (19) communicates with an inlet (28) and a hose connector (19) with an outlet (30) of the screwed-on throwaway filter (10) via connecting channels (24).

5. Liquid filter according to claim 4, **characterized in that** the screwed-on throwaway filter (10) features a filter element (27) arranged in a housing (12).

6. Liquid filter according to claim 5, **characterized in that** the filter element (27) sealingly separates an inlet (28) from an outlet (30) for the liquid to be filtered.

7. Liquid filter according to one of the claims 4 to 6, **characterized in that** the throwaway filter (10) is designed as fuel filter for an internal combustion engine.

## Revendications

1. Plaque d'adaptation (11) pour un filtre à liquide avec raccord de tuyau intégré (19) ainsi qu'avec une entrée (28) et avec une sortie 30) qui présentent chacune un raccord de tuyau (19) en tant que raccord pour un tuyau d'alimentation en liquide et en tant que raccord pour un tuyau de sortie,
**caractérisée en ce qu'**
un autre raccord (20;21) pour un chauffage pour le fluide à filtrer est prévu et qu'un composant en une seule pièce avec raccord à vis (31) pour un filtre perdu 10) avec un trou taraudé (17) existe.

2. Plaque d'adaptation (11) selon la revendication 1, **caractérisée en ce que** le raccord pour le chauffage est réalisé sous forme d'une fermeture à baïonnette (20).

3. Plaque d'adaptation (11) selon la revendication 1 ou 2, **caractérisée en ce qu'**un dispositif de fixation (22) est prévu.

4. Filtre à liquide avec une plaque d'adaptation (11) selon la revendication 1, **caractérisé en ce que** l'un des raccords de tuyau (19) communique avec une entrée (28) et un raccord de tuyau (19) avec une sortie (30) du filtre perdu vissé (10) par l'intermédiaire de canaux de connexion (24).

5. Filtre à liquide selon la revendication 4, **caractérisé en ce que** le filtre perdu vissé (10) présente un élément filtrant (27) placé dans un carter (12).

6. Filtre à liquide selon la revendication 5, **caractérisé en ce que** l'élément filtrant (27) sépare de manière étanche une entrée (28) d'une sortie (30) pour le liquide à filtrer.

7. Filtre à liquide selon une des revendications 4 à 6, **caractérisé en ce que** le filtre perdu (10) est réalisé sous forme d'un filtre à carburant pour un moteur à combustion interne.
